# EUROPÄISCHE PATENTANMELDUNG

(11) **EP 0 596 353 A2**
(43) Veröffentlichungstag der Anmeldung: **11.05.1994**
(21) Anmeldenummer: 93117214.2
(22) Anmeldetag: 22.10.1993
(51) Int. Cl.: H01F 41/02, H01F 13/00, H02K 15/02, H02K 15/03

(54) **Verfahren zur Herstellung von mit Vorzugsrichtungen magnetisierbaren Körpern**

(30) Priorität: 05.11.1992 DE 4237401
(71) Anmelder: SIEMENS AKTIENGESELLSCHAFT, D-80333 München (DE)
(72) Erfinder: Rosenberg, Heinz, Dipl.-Ing., A-2752 Wöllersdorf (AT)

(57) **Zusammenfassung**

Die Erfindung betrifft ein Verfahren zur Herstellung von mit Vorzugsrichtungen magnetisierbaren Körpern, bei welchem Verfahren ein aus kleinen magnetisierbaren Teilchen und einer aus amagnetischem Material bestehenden, sich im flüssigen Zustand befindlichen erstarrungsfähigen Masse gebildetes Gemisch (5) in einer dem herzustellenden Körper entsprechenden Gußform (1,13,20) mit Magnetfeldern beaufschlagt wird, deren Verlauf den geforderten Vorzugsrichtungen entspricht und die zumindest bis zum Erstarren der Masse aufrechterhalten bleiben.

## Beschreibung

Die Erfindung betrifft ein Verfahren zur Herstellung von mit Vorzugsrichtungen magnetisierbaren Körpern.

Solche Körper sind insbesondere Läufer oder Ständer elektrischer Maschinen. Bei diesen ist eine gute magnetische Leitfähigkeit für jene Magnetfelder nötig, die für den technischen Zweck erforderlich sind (Nutzfelder, bei elektrischen Maschinen Längsfelder), dagegen soll die Leitfähigkeit für dazu quer verlaufende Felder (Querfelder elektrischer Maschinen oder auch Streufelder) vielfach möglichst gering gehalten werden, um störende Nebenwirkungen zu vermeiden oder einen erwünschten Reluktanzeffekt zu erzielen. Die betreffenden Teile sind dann für die Längsfelder in Vorzugsrichtung magnetisierbar auszuführen.

Es sind verschiedene Ausführungsvarianten zum Ausbilden von Vorzugsrichtungen für das Längsfeld elektrischer Maschinen bekannt. So ist bei Maschinen mit ausgeprägten Polen (Seite 410 des Buches "Elektrische Maschinen" von Bödefeld/Sequenz, 6. Auflage, Springer-Verlag 1962) durch die äußere Form dieser Pole die magnetische Vorzugsrichtung für das Längsfeld gegeben. Nachteilig dabei ist, daß durch den zur Verminderung der Querfeld-Leitfähigkeit erforderlichen Abstand zwischen benachbarten Polen die Polbedekkung verkleinert und damit die Längsfeld-Leitfähigkeit vermindert wird, was wiederum zu einer geringeren Maschinenausnutzung führt.

Diese Nachteile weist eine aus der DE-A-34 01 163 bekannte Maschine in Reluktanzversion mit lamellierter Erregeranordnung zwar nicht auf, jedoch erfordert die Herstellung der lamellierten Erregeranordnung einen hohen konstruktiven und technologischen Aufwand. Bei dieser Erregeranordnung wird nämlich die Vorzugsrichtung für das Längsfeld durch eine Anzahl stofflich geschlossener magnetisierbarer Lamellenstreifen, die durch amagnetische Zwischenräume voneinander getrennt sind, erreicht. Dies ergibt eine inhomogene Struktur der Pole, die sich nachteilig auf deren Festigkeit und Steifigkeit auswirkt.

Aufgabe der Erfindung ist es, ein Verfahren anzugeben, nach dem ein mit Vorzugsrichtungen magnetisierbarer Körper in einfacher Weise hergestellt werden kann, der die vorgenannten Nachteile nicht aufweist.

Die Lösung der gestellten Aufgabe gelingt nach der Erfindung durch ein Verfahren, bei welchem ein aus kleinen magnetisierbaren Teilchen und einer aus amagnetischem Material bestehenden, sich im flüssigen Zustand befindlichen erstarrungsfähigen Masse gebildetes Gemisch in einer dem herzustellenden Körper entsprechenden Gußform mit Magnetfeldern beaufschlagt wird, deren Verlauf den geforderten Vorzugsrichtungen entspricht und die zumindest bis zum Erstarren der Masse aufrechterhalten bleiben. Die magnetisierbaren Teilchen fügen sich dabei während der flüssigen Phase des Gemisches längs der magnetischen Kraftlinien aneinander und werden durch das Erstarren der Masse in ihrer Lage festgehalten, wodurch magnetische Leitpfade in eine Vorzugsrichtung gebildet werden. Die nach dem Verfahren hergestellten Körper weisen somit magnetische Vorzugsrichtungen auf. Zwischen den einzelnen Leitpfaden ergeben sich mit amagnetischer Masse ausgefüllte Abstände, deren Größe von dem Volumenanteil der magnetisch leitfähigen Teilchen an dem Gemisch abhängt, wodurch die magnetische Querleitfähigkeit bestimmt wird. Durch den genannten Anteil kann somit diese Leitfähigkeit und damit die Ausgeprägtheit der Vorzugsrichtung variiert werden, wobei ein für die Längsfelder ausreichender Querschnitt der Leitpfade nicht unterschritten werden darf.

Die erstarrungsfähige Masse kann flüssiges Leichtmetall oder flüssiger Kunststoff sein. Im letztgenannten Fall werden durch die Isolationsfähigkeit von Kunststoff Wirbelströme im Betrieb der herzustellenden Körper praktisch vollständig vermieden. Leichtmetall besitzt hingegen den Vorteil einer guten Wärmeleitfähigkeit.

Die magnetisierbaren Teilchen können aus reinem Eisen oder aus einer magnetisierbaren Legierung bestehen. Es kann dabei eine Legierung mit gegenüber reinem Eisen erhöhter Sättigungsflußdichte zur Anwendung kommen. Hierdurch kann der Volumenanteil der magnetisierbaren Teilchen an dem Gemisch und durch die damit verbundenen größeren Abstände der magnetischen Leitpfade die magnetische Querleitfähigkeit vermindert werden, so daß die Längsleitfähigkeit stärker ausgeprägt wird. Ferner kann für die magnetisierbaren Teilchen eine Legierung mit gegenüber reinem Eisen erhöhter Curie-Temperatur verwendet werden, wodurch der Effekt der Ausrichtung und der Zusammenfügung der Teilchen die Magnetfelder verstärkt wird, wenn die erstarrungsfähige Masse aus flüssigem Leichtmetall besteht.

Durch nadelförmige Ausbildung der magnetisierbaren Teilchen wird die von den Magnetfeldern auf sie ausgeübte Richtkraft vergrößert, so daß sehr kompakte Leitpfade gebildet werden, die sich durch eine hohe magnetische Leitfähigkeit auszeichnen. Dieser Effekt wird noch verstärkt, wenn die nadelförmigen Teilchen aus einem Werkstoff bestehen, der in Längsrichtung der Nadeln eine magnetische Vorzugsrichtung besitzt.

Um eine durch Schwerkraft bedingte Entmischung zu vermeiden und die Ausrichtung der Teilchen durch die Magnetfelder zu unterstützen, ist es vorteilhaft, die mit dem Gemisch gefüllte Gußform vor und/oder während der Magnetfeld-Beaufschlagung mechanischen Erschütterungen (Vibrationen, Rüttelschwingungen) auszusetzen.

Weiterhin kann die Wirkung der Magnetfelder noch dadurch verbessert werden, daß diese Felder zeitlich impulsförmig, z.B. als Wechselfelder aufgebracht werden.

Wenn der herzustellende Körper betriebsmäßig mit Permanentmagneten zu versehen ist, dann können diese Magnete bereits im flüssigen Gemisch angeordnet werden, und nach dessen Erstarren darin verbleiben. Die Magnete können damit zumindest einen Teil der die Ausrichtung der Teilchen bewirkenden Magnetfelder erzeugen.

Anhand mehrerer in der Zeichnung dargestellter Ausführungsbeispiele wird die Erfindung nachfolgend näher erläutert. Es zeigt:
FIG 1 eine Anordnung zur Herstellung eines 4-poligen Vollpolläufers für spätere Anbringung von Luftspaltmagneten im Querschnitt,
FIG 2 eine Anordnung im Schnitt entlang der Linie 11-11 in FIG 1,
FIG 3 eine Anordnung zur Herstellung eines 4-poligen Läufers mit ausgeprägten Polen im Querschnitt,
FIG 4 eine Anordnung zur Herstellung eines 4-poligen Läufers mit inneren Permanentmagneten und einem Anlaufkäfig im Querschnitt,
FIG 5 eine Anordnung im Schnitt entlang der Linie V-V in FIG 4.

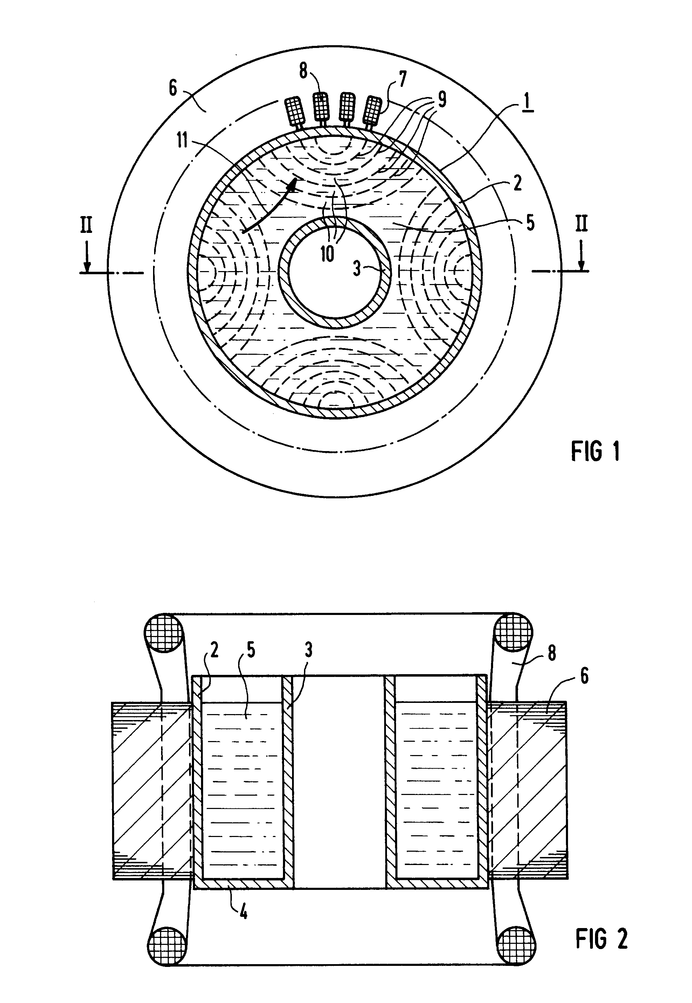

In den FIG 1 und 2 ist mit 1 eine aus amagnetischem Werkstoff bestehende Gußform bezeichnet. Die Gußform 1 wird aus einem hohlzylindrischen Außenteil 2 und einem konzentrisch zu diesem angeordneten hohlzylindrischen Innenteil 3 gebildet, wobei die beiden Teile auf ihrer einen Seite durch einen Bodenteil 4 miteinander verbunden sind. Die Gußform hat somit die Form eines ringförmigen Topfes.

In die Gußform 1 ist ein aus kleinen magnetisierbaren Teilchen und einer aus amagnetischem Material bestehenden, sich im flüssigen Zustand befindlichen erstarrungsfähigen Masse gebildetes Gemisch 5 eingefüllt. Die Gußform 1 ist in ein sie umschließendes, geblechtes Magnetisierungsteil 6 eingesetzt, das in Nuten 7 eine Magnetisierungswicklung 8 trägt. Das Magnetisierungsteil 6 ist nach Art eines Ständers einer elektrischen Maschine und die Magnetisierungswicklung 8 nach Art einer Ständerwicklung mit entsprechender Polzahl ausgebildet. Die FIG 1 zeigt eine 4-polige Ausführung der Magnetisierungswicklung 8.

Zur Herstellung eines mit Vorzugsrichtungen magnetisierbaren Körpers, z.B. des Läufers einer elektrischen Maschine, wird nach dem Einfüllen des Gemisches in die Gußform 1 die Magnetisierungswicklung 8 an Spannung gelegt und es werden dadurch der Polzahl der Magnetisierungswicklung 8 entsprechende Magnetfelder gebildet, die das Gemisch 5 durchsetzen und sich über das Magnetisierungsteil 6 schließen.

Diese Magnetfelder bewirken in dem Gemisch 5 ein Aneinanderfügen der kleinen magnetisierbaren Teilchen längs der magnetischen Kraftlinien, wodurch magnetische Pfade 9 (in FIG 1 gestrichelt dargestellt) für das spätere Längsfeld entstehen. Es ergeben sich zwischen den durch die magnetischen Teilchen gebildeten Pfaden 9 freie Abstände 10, deren Größe vom Volumenanteil der magnetischen Teilchen im Gemisch abhängt. Ein bei einem späteren Einsatz des Körpers als Läufer einer elektrischen Maschine auftretendes Querfeld, wie es durch einen voll gezeichneten Pfeil 11 angedeutet ist, muß die freien Abstände 10 durchsetzen. Hierdurch wird das Querfeld gegenüber dem Längsfeld der Maschine wesentlich geschwächt. Das Längsfeld erhält dagegen durch die aus den magnetisierbaren Teilchen gebildeten Pfade 9 eine Vorzugsrichtung.

Wird die Wandstärke des hohlzylindrischen Außenteils 2 der Gußform 1 entsprechend der Höhe von auf dem Läufer aufzubringenden Luftspaltmagneten und dem Luftspalt der Maschine sowie gegebenenfalls abzüglich eines Bearbeitungszuschlages für den Läufer bemessen, kann als Magnetisierungsteil 6 der für die Maschine vorgesehene, bewickelte Ständer verwendet werden. Die Magnetisierungswicklung 8 wird mit konstantem oder pulsierendem Gleichstrom oder mit Wechselstrom gespeist. Bei ausreichender Stärke der erzeugten magnetischen Durchflutung und entsprechender Dünnflüssigkeit des Gemisches 5 genügt eine kurzzeitige Einwirkung der Magnetfelder zur Bildung der magnetischen Pfade.

Wenn die Anordnung zur Verhinderung einer Entmischung vor Erstarrung des Gemisches mechanischen Erschütterungen ausgesetzt wird, ist ggf. noch ein Abschlußdeckel für die Gußform 1 vorzusehen.

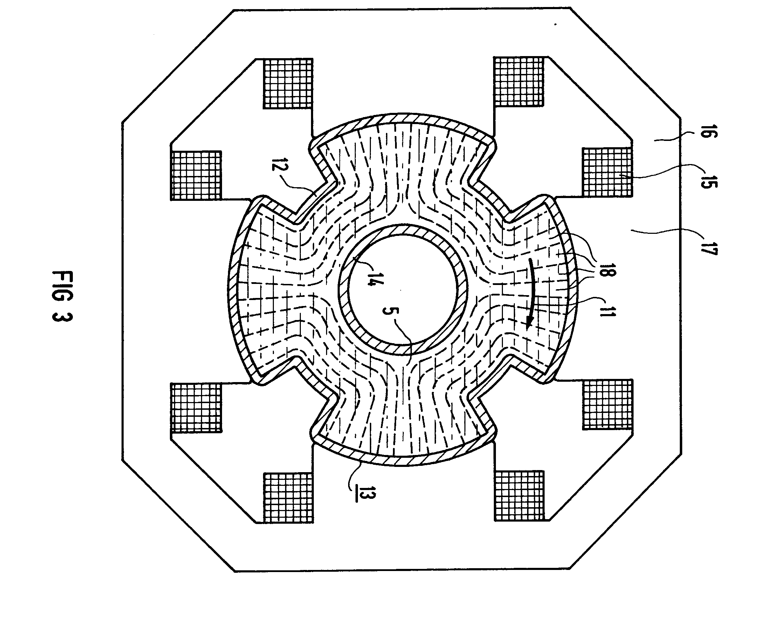

Bei dem Ausführungsbeispiel nach FIG 3 weist der Außenteil 12 einer weiteren aus amagnetischem Material bestehenden Gußform 13, die den ausgeprägten Polen eines aus dem Gemisch 5 zu bildenden Läufers entsprechende Kontur auf. Der Innenteil 14 und der Boden der weiteren Gußform 13 entsprechen der Gußform 1 nach FIG 1 und 2. Die weitere Gußform 13 sitzt zwischen an einem Joch 16 vorstehend angeordneten Polen 17, die durch das Joch 16 miteinander verbunden sind. Das Joch 16 und die Pole 17 bestehen aus geblechtem und/oder massivem Eisen. Durch auf den Polen 17 angeordnete konzentrierte Magnetisierungswicklungen 15 werden Magnetfelder erzeugt, durch die entsprechend deren Kraftlinienverlauf wiederum magnetische Pfade 9 gebildet werden, die in Richtung des im Betrieb der elektrischen Maschine auftretenden Längsfeldes verlaufen. Das wiederum durch einen Pfeil 11 angedeutete Querfeld der Maschine muß dagegen die mit amagnetischem Material ausgefüllten Zwischenräume 18 zwischen den aus den magnetisierbaren Teilchen gebildeten magnetischen Pfade 9 durchsetzen. Ein derartiger mit ausgeprägten Polen hergestellter Läufer kann als reiner Reluktanzläufer verwendet oder zusätzlich mit Luftspaltmagneten ausgerüstet werden.

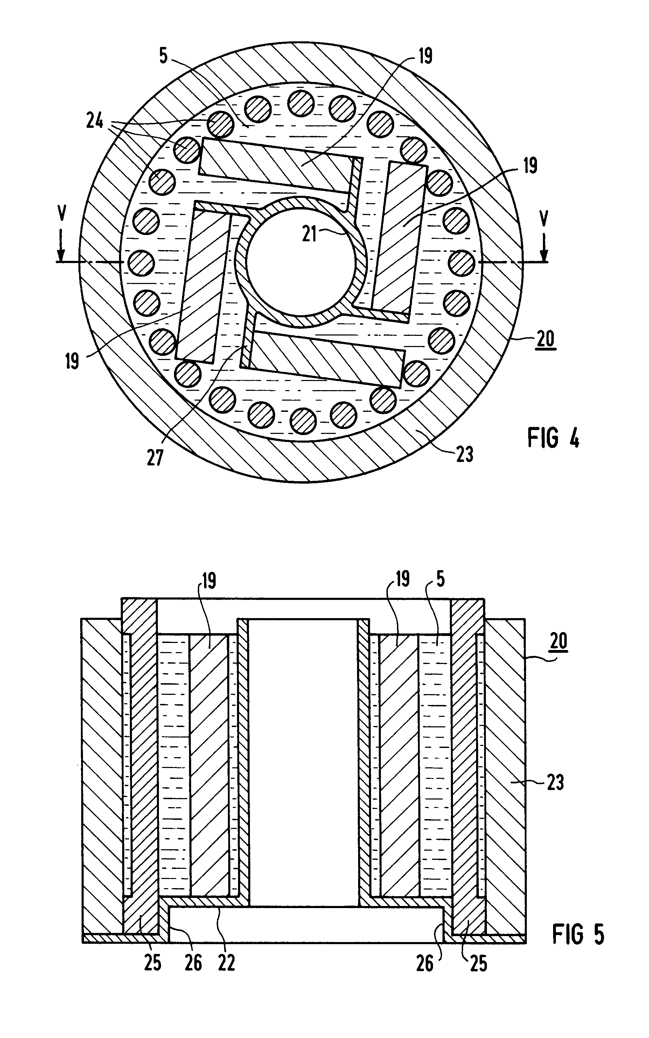

Bei dem weiteren schematischen Ausführungsbeispiel eines Läufers für eine elektrische Maschine nach FIG 4 und 5 sind Permanentmagnete 19 im Gemisch 5 angeordnet, die in diesem nach Erstarren verbleiben. Die Permanentmagnete 19 erzeugen während des Herstellungsvorganges die zur Bildung der aus den magnetisierbaren Teilchen bestehenden magnetischen Pfade 9 notwendigen Magnetfelder und später die betriebsmäßigen Polrad-Magnetfelder der Maschine. Für die Herstellung eines solchen Läufers ist eine spezielle Gußform 20 notwendig. Diese weist einen aus amagnetischem Material bestehenden Innenzylinder 21, einen ebenfalls aus amagnetischem Material bestehenden abgekröpften Bodenteil 22 und einen aus ferromagnetischem Material bestehenden hohlen Außenzylinder 23 auf, der als Rückschluß für die von dem Permanentmagneten 19 erzeugten Magnetfelder dient. Anstelle des hohlen Außenzylinders 23 kann auch ein Magnetisierungsteil 6 gemäß FIG 1 und 2 bzw. ein Joch 16 mit Polen 17 gemäß FIG 3 verwendet werden, wobei in die Bohrung des jeweiligen Magnetisierungsteiles 6 bzw. der Pole 17 ein aus amagnetischem Material bestehender, dünnwandiger Hohlzylinder zur Aufnahme des Gemisches 5 eingesetzt werden muß. Es besteht dann die Möglichkeit, die von den Permanentmagneten 19 erzeugten Magnetfelder durch zusätzliche, mittels der Magnetisierungswicklung 8 bzw. der konzentrierten Magnetisierungswicklung 15 erzeugte Durchflutungen zu verstärken.

Der in FIG 4 und 5 gezeigte Läufer ist mit einem vorgefertigten Anlaufkäfig 24 versehen, der vor dem Eingießen des Gemisches 5 in die spezielle Gußform 20 eingefügt und dessen unterer Stirnring 25 durch die Kröpfung 26 des Bodenteiles 22 zentriert wird. Ist das Gemisch 5 mit flüssigem Kunststoff gebildet, so kann ein aus Leichtmetall gegossener Anlaufkäfig 24 verwendet werden. Besteht hingegen die Gemischflüssigkeit aus Leichtmetall, so ist für den Anlaufkäfig 25 ein höher schmelzendes Metall z.B. Kupfer oder Bronze vorzusehen.

Der Innenzylinder 21 der speziellen Gußform 20 trägt radial abstehende Ansätze 27, die einerseits mit Stäben des Anlaufkäfigs 24 die Lage der Permanentmagnete 19 bestimmen und andererseits amagnetische Streufeldpfade für die Permanentmagnete 19 ergeben.

## Patentansprüche

1. Verfahren zur Herstellung von mit Vorzugsrichtungen magnetisierbaren Körpern, bei welchem Verfahren ein aus kleinen magnetisierbaren Teilchen und einer aus amagnetischem Material bestehenden, sich im flüssigen Zustand befindlichen erstarrungsfähigen Masse gebildetes Gemisch (5) in einer dem herzustellenden Körper entsprechenden Gußform (1,13,20) mit Magnetfeldern beaufschlagt wird, deren Verlauf den geforderten Vorzugsrichtungen entspricht und die zumindest bis zum Erstarren der Masse aufrecht erhalten bleiben.

2. Verfahren nach Anspruch 1,
dadurch gekennzeichnet,
daß die magnetisierbaren Teilchen aus reinem Eisen bestehen.

3. Verfahren nach Anspruch 1,
dadurch gekennzeichnet,
daß die magnetisierbaren Teilchen aus einer magnetisierbaren Legierung bestehen.

4. Verfahren nach Anspruch 3,
dadurch gekennzeichnet,
daß die magnetisierbare Legierung eine gegenüber reinem Eisen erhöhte magnetische Sättigungsflußdichte aufweist.

5. Verfahren nach Anspruch 3,
dadurch gekennzeichnet,
daß die magnetisierbare Legierung eine gegenüber reinem Eisen erhöhte Curie-Temperatur aufweist.

6. Verfahren nach einem oder mehreren der vorhergehenden Ansprüche, dadurch gekennzeichnet,
daß die magnetisierbaren Teilchen nadelförmig ausgebildet sind.

7. Verfahren nach Anspruch 6,
dadurch gekennzeichnet,
daß die nadelförmig ausgebildeten magnetisierbaren Teilchen aus einem Werkstoff bestehen, der in Längsrichtung der Nadeln eine magnetische Vorzugsrichtung besitzt.

8. Verfahren nach einem oder mehreren der vorhergehenden Ansprüche, dadurch gekennzeichnet,
daß die mit dem Gemisch (5) gefüllte Gußform (1,13,20) zumindest vor und/oder während der Beaufschlagung mit Magnetfeldern mechanischen Erschütterungen ausgesetzt wird.

9. Verfahren nach einem oder mehreren der vorhergehenden Ansprüche, dadurch gekennzeichnet,
daß die Magnetfelder einen zeitlich impulsförmigen Verlauf erhalten.

10. Verfahren nach einem oder mehreren der vorhergehenden Ansprüche 1 bis 8,
dadurch gekennzeichnet,
daß die Magnetfelder zumindest teilweise durch Permanentmagnete (19) erzeugt werden, die im Gemisch (5) nach dessen Erstarren verbleiben.
